(19)

Europäisches
Patentamt
European
Patent Office
Office européen
des brevets

(11) **EP 2 224 630 A1**

(12) **EUROPEAN PATENT APPLICATION**
published in accordance with Art. 153(4) EPC

(43) Date of publication:
**01.09.2010 Bulletin 2010/35**

(21) Application number: **07849874.8**

(22) Date of filing: **20.12.2007**

(51) Int Cl.:
*H04J 14/00* (2006.01)     *H04B 10/02* (2006.01)
*H04B 10/18* (2006.01)     *H04B 10/20* (2006.01)
*H04J 14/02* (2006.01)

(86) International application number:
**PCT/JP2007/001446**

(87) International publication number:
**WO 2009/081449 (02.07.2009 Gazette 2009/27)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Fujitsu Limited
Kawasaki-shi, Kanagawa 211-8588 (JP)**

(72) Inventors:
• **FUJITA, Takehiro
Kawasaki-shi
Kanagawa 211-8588 (JP)**

• **TAKEGUCHI, Koji
Kawasaki-shi
Kanagawa 211-8588 (JP)**
• **YAMAMOTO, Junji
Kawasaki-shi
Kanagawa 211-8588 (JP)**

(74) Representative: **HOFFMANN EITLE
Patent- und Rechtsanwälte
Arabellastrasse 4
81925 München (DE)**

(54) **WAVELENGTH DIVISION MULTIPLEXING EQUIPMENT AND METHOD FOR DISPERSION COMPENSATION OF OPTICAL SIGNAL**

(57)     When line trouble occurs in an optical network, the restoration time can be reduced. A transponder 21 includes an active line 41 and a standby line 43, and a transponder 22 includes an active line 42 and a standby line 44. The standby line 44 of the transponder 22 is accommodated in the same optical line as the active line 41 of the transponder 21. Upon detection of line trouble, the receiving transponder 24 acquires a VDC setting value for the active line 41, and sets the VDC setting value for the standby line 44 on the basis of the acquired VDC setting value.

F I G. 1

EP 2 224 630 A1

## Description

## Technical Field

The present invention relates to a wavelength division multiplexing apparatus and a dispersion compensating method for an optical signal.

## Background Art

Recently, a desire to implement a 40 Gbit/s optical system of the next generation grows for its merits in larger capacity, smaller structure, lower cost, higher frequency utilization, etc.
Generally, since various optical parts configuring a device arranged for optical fiber and each node have wavelength dispersion, the distortion of an optical waveform occurs due to the wavelength dispersion during the passage of modulated signal light through them. Since the distortion of an optical waveform incurs the degradation of transmission quality (error rate etc.), it can be a factor of limiting the system performance relating to a maximum transmission distance etc.
Generally, a dispersion tolerance is used as an index indicating the tolerance to waveform distortion by the dispersion of a transmitter-receiver. For example, the dispersion tolerance of a transmitter-receiver at the bit rate of 40 Gbit/s or more is about several tens ps/nm. It is very low as compared with the dispersion tolerance of about 1000 ps/nm of the 10 Gbit/s signal which is currently used popularly. Therefore, to realize the transmission of signals of a bit rate of 40 Gbit/s or more, it is necessary to perform dispersion control at high accuracy by, for example, arranging a variable dispersion compensator (VDC) at an input terminal of a receiver.
On the other hand, at present, to reserve high reliability of a network, it is required to perform high-speed (normally 50 ms or less) service recovery if trouble occurs when, for example, optical fiber is discoupled etc.
To attain the above-mentioned objects, a protection system represented by an OUPSR (optical unidirectional path switched ring) has been introduced.

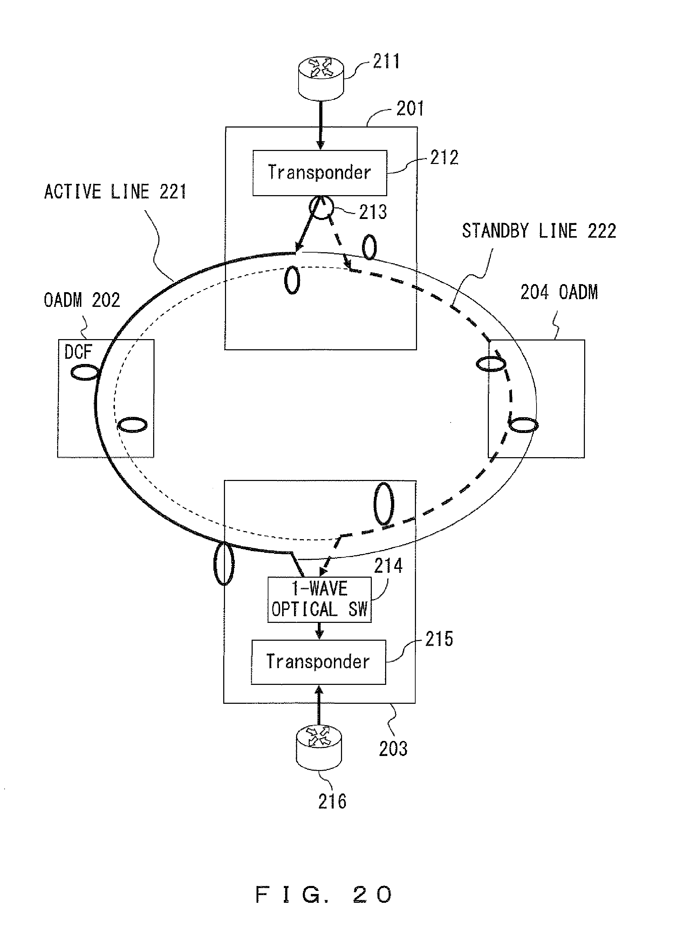

FIG. 20 is an example of a configuration of an optical network in the OUPSR system. In the optical network, a wavelength division multiplexing apparatus 201, an OADM (optical add drop multiplexer) 202, a wavelength division multiplexing apparatus 203, and an OADM 204 are coupled in ring-shaped form.
A signal input from a router 211 is output to an active line 221 through a transponder 212 and an optical splitter 213, and input to the wavelength division multiplexing apparatus 203 on the receiving side through the OADM 202. The wavelength division multiplexing apparatus 203 has a 1-wave optical switch 214 and a transponder 215, and outputs an optical signal dispersion-compensated by the transponder 215 to a router 216. The transponder 212 has a standby line 222 through another OADM 204.
In the optical network system, when trouble occurs in the active line 221, the receiving transponder 215 switches to the standby line 222 to receive a signal.
For example, since the dispersion tolerance is low in the communication at 40 Gbit/s, the receiving transponder 215 has to make an adjustment for setting the optimum value of the amount of dispersion compensation of the variable dispersion compensator, and several minutes are required from the occurrence of the trouble to the communication of signals.
In the patent document 1, the optimum amounts of dispersion compensation of a plurality of optical transmission routes are stored in memory in advance, and the amount of dispersion compensation of a variable dispersion compensator is controlled depending on the optimum amount of dispersion compensation of a changed route stored in the memory when a change of the optical transmission route is detected by the route change detection device.

Patent Document 1: Japanese Laid-open Patent Publication No. 2003-179580

## Disclosure of Invention

The present invention aims at reducing the restoration time for line trouble in an optical network.
An aspect of the wavelength division multiplexing apparatus is a wavelength division multiplexing apparatus used in a network in which a transmitting optical transmission device and a receiving optical transmission device are coupled via an active line and a standby line, and includes an acquisition device for acquiring dispersion compensation information for the active line accommodated in a same optical line as the standby line from another optical transmission device, and a dispersion compensation device for compensating for dispersion of an optical signal transmitted through the standby line according to the dispersion compensation information acquired by the acquisition device.
The wavelength division multiplexing apparatus can reduce the restoration time for line trouble.
In the wavelength division multiplexing apparatus, the acquisition device acquires dispersion compensation information stored in a storage device of the other optical transmission device before detecting trouble.
With the above-mentioned configuration, since the dispersion compensation information can be acquired for the active line of the other optical transmission device before the occurrence of the trouble, the restoration time for the trouble can be further reduced.

In the above-mentioned wavelength division multiplexing apparatus, the acquisition device receives the dispersion compensation information transmitted from the other optical transmission device to the network, and the dispersion compensation device dispersion-compensates for the standby line according to the dispersion compensation information received by the acquisition device.

With the above-mentioned configuration, the dispersion compensation information about the other optical transmission device transmitted on the network can be received and the dispersion-compensation of the standby line can be performed.

In the wavelength division multiplexing apparatus above, the acquisition device corrects the dispersion compensation information received from the other optical transmission device depending on the difference between the wavelength of the optical signal received by the other optical transmission device and wavelength of the optical signal received by the own device, and performs a calculation using the corrected value as the dispersion compensation information for the standby line.

With the above-mentioned configuration, appropriate dispersion compensation information depending on the wavelength can be acquired from the dispersion compensation information for the optical signals having different wavelengths.

The wavelength division multiplexing apparatus further includes an output device for transmitting the dispersion compensation information about the dispersion compensation device to the other optical transmission device on the network using an OSC (optical supervisor channel).

With the above-mentioned configuration, the dispersion compensation information about the own device can be transmitted to the other optical transmission device using the OSC.

The wavelength division multiplexing apparatus above also includes an output device for inserting the dispersion compensation information about the dispersion compensation device into the blank byte of the overhead of the signal format of the main signal and transmitting the information to the other optical transmission device in the network.

With the above-mentioned configuration, the dispersion compensation information about the own device can be transmitted using the signal format of the main signal.

The wavelength division multiplexing apparatus above further includes a storage device for storing dispersion compensation information in the dispersion compensation device and outputting the stored dispersion compensation information to the other optical transmission device, and the acquisition device acquires the dispersion compensation information for the active line accumulated in the same optical line as the standby line of the own device from the storage device of the other optical transmission device.

With the above-mentioned configuration, the dispersion compensation information for the active line is acquired from the storage device of the other optical transmission device to set the dispersion compensation information about the own device.

In the wavelength division multiplexing apparatus, the acquisition device includes a setting device for setting a dispersion compensation value of the dispersion compensation device, and outputting the set dispersion compensation value to the other optical transmission device, and the setting device acquires a dispersion compensation value for the active line accumulated in the same optical line as the standby line of the own device from the setting device of the other optical transmission device, and sets the acquired dispersion compensation value in the dispersion compensation device.

With the configuration, a dispersion compensation value for the active line can be acquired from the setting device of the other optical transmission device, and an appropriate dispersion compensation value for the dispersion compensation device of the own device can be set in a short time on the basis of the acquired value.

The wavelength division multiplexing apparatus includes a signal quality detection device for detecting the signal quality of a main signal to be received, a calculation device for calculating the dispersion compensation information corrected on the basis of the signal quality detected by the signal quality detection device, and a storage device for storing the dispersion compensation information calculated by the calculation device and outputting the stored dispersion compensation information to the other optical transmission device. The acquisition device includes a setting device for acquiring the dispersion compensation information for the active line accumulated in the same optical line as the standby line of the own device from the storage device of the other optical transmission device, and setting a dispersion compensation value of the dispersion compensation device according to the acquired dispersion compensation information.

With the configuration, the setting device can acquire the dispersion compensation information for the active line from the storage device of the other optical transmission device, and set an appropriate dispersion compensation value in the dispersion compensation device of the own device in a short time on the basis of the acquired value.

**Brief Description of Drawings**

FIG. 1 is a configuration of the network according to the first embodiment of the present invention;

FIG. 2 illustrates the sequence of the operation according to the first embodiment of the present invention;

FIG. 3 illustrates the sequence of the operation according to the second embodiment of the present invention;

FIG. 4 is a configuration of the network according to the third embodiment of the present invention;

FIG. 5 is a configuration of the wavelength division multiplexing apparatus according to the fourth embodiment of the present invention;

FIG. 6 is a configuration of the wavelength division multiplexing apparatus according to the fifth embodiment of the present invention;

FIG. 7 is a configuration of the wavelength division multiplexing apparatus according to the sixth embodiment of the present invention;

FIG. 8 is a configuration of the network according to the seventh embodiment of the present invention;

FIG. 9 is an example of a configuration of the wavelength division multiplexing apparatus according to the seventh embodiment of the present invention;

FIG. 10 is a flowchart of the operation of the process according to the seventh embodiment of the present invention;

FIG. 11 is a flowchart of the operation of another process according to the seventh embodiment of the present invention;

FIG. 12 is a configuration of the network according to the eighth embodiment of the present invention;

FIG. 13 is an example of a configuration of the wavelength division multiplexing apparatus according to the eighth embodiment of the present invention;

FIG. 14 is an example of the data format of Digital Wrapper;

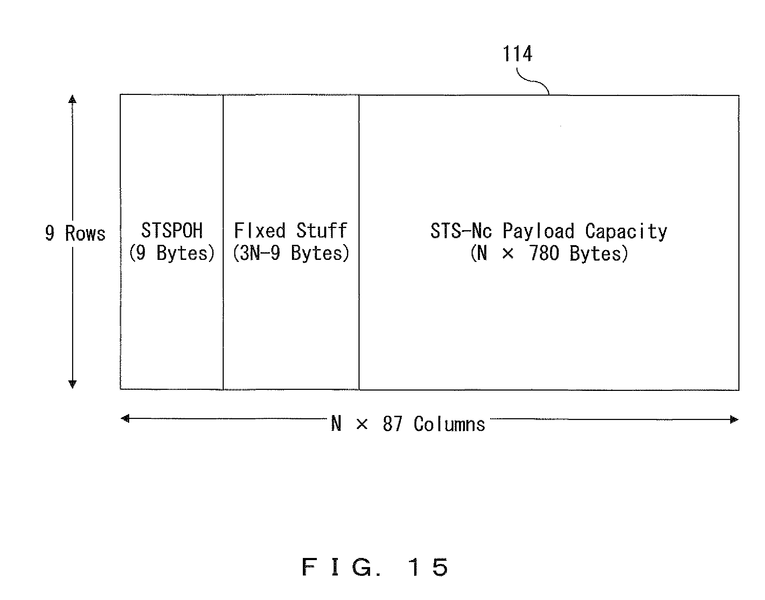

FIG. 15 is a configuration of the SONET frame;

FIG. 16 is a configuration of the overhead of the SONET frame;

FIG. 17 illustrates a network of a mesh configuration;

FIG. 18 illustrates a network of a linear configuration;

FIG. 19 illustrates another network of a linear configuration; and

FIG. 20 is a configuration of a conventional network.

## Best Mode for Carrying Out the Invention

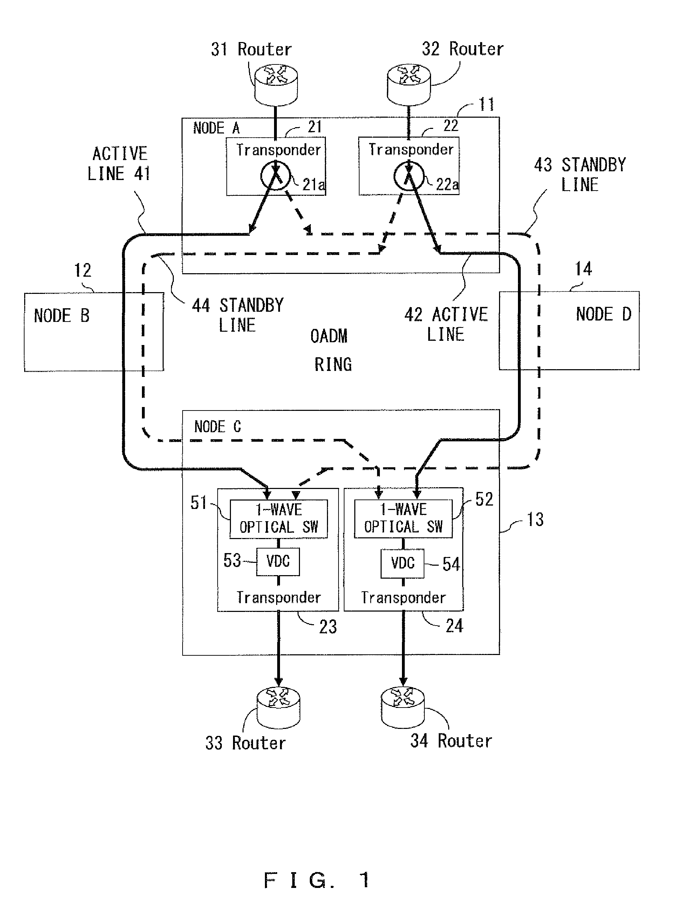

The preferred embodiments of the present invention are described below with reference to the attached drawings. FIG. 1 is a configuration of the optical network according to the first embodiment of the present invention. The optical network is an example of transmitting a signal at a communication speed of 40 Gbit/s.

FIG. 1 is a configuration of an OADM (optical ad drop multiplex) ring network. For simple explanation, it is assumed that the wavelength division multiplexing apparatus (WDM) includes two transponders. A wavelength division multiplexing apparatus (node A) 11 includes transponders (corresponding to optical transmission devices) 21 and 22. A wavelength division multiplexing apparatus 13 also includes two transponders 23 and 24.

The network in FIG. 1 is an example in which the optical signals output from the transponders 21 and 22 are output respectively to an active line 41 and a standby line 44, passed through a wavelength division multiplexing apparatus 12 on a transmission line and received by the transponders 23 and 24, and the optical signals output from the transponders 21 and 22 are output respectively to a standby line 43 and an active line 42, passed through a wavelength division multiplexing apparatus 14 and received by the transponders 23 and 24.

The transponders 21 and 22 convert the signals input respectively from the routers 31 and 32 into optical signals of the wavelengths for a WDM. The optical signal output from the transponder 21 is branched by an optical splitter 21a in two directions of the active line 41 and the standby line 43. The optical signal output from the transponder 22 is branched by an optical splitter 22a in two directions of the active line 42 and the standby line 44.

The transponder 21 uses the path through the wavelength division multiplexing apparatus (node B) 12 to the transponder 23 of the wavelength division multiplexing apparatus (node C) 13 as the active line 41. The standby line 44 of the transponder 22 is accommodated in the physical line which also accommodates the active line 41 (refer to the standby line 44 indicated by the broken line in FIG. 1).

The transponder 22 uses the path through the wavelength division multiplexing apparatus (node D) 14 to the wavelength division multiplexing apparatus 13 as the active line 42. The standby line 43 of the transponder 21 is accommodated in the physical line which also accommodates the active line 42.

The transponders 23 and 24 of the wavelength division multiplexing apparatus 13 includes 1-wave optical switches (hereinafter referred to as optical switches) 51 and 52 for selecting one of the active line and the standby line and outputting an optical signal, and variable dispersion compensators (VDC) 53 and 54 for compensating for residual dispersion. The variable dispersion compensators 53 and 54 have the functions (corresponding to the acquisition device and the dispersion compensation device) of acquiring the dispersion compensation information (VDC setting value etc.)

of another transponder and compensating for residual dispersion.

The transponder 23 selects one of the active line 41 and the standby line 43 by the optical switch 51, compensates for the dispersion of the optical signal by the variable dispersion compensator 53, performs an optoelectronic conversion in the transponder 23, performs signal processing including error correction etc., performs an electro-optic conversion, and outputs the result to a router 33. Similarly, the transponder 24 selects one of the active line 42 and the standby line 44 by the optical switch 52, performs signal-processing the optical signal dispersion-compensated by the variable dispersion compensator 54, and outputs the result to a router 34.

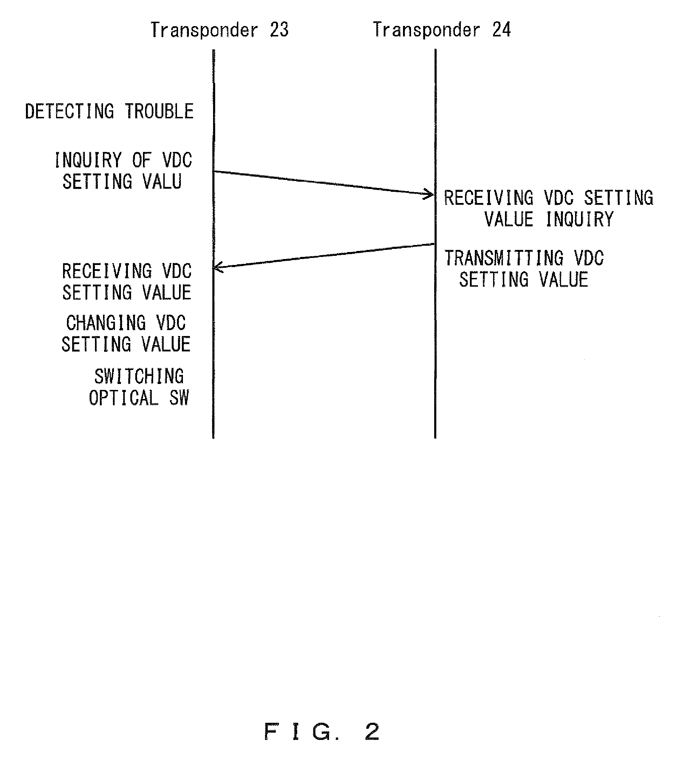

FIG. 2 illustrates the sequence of the operation according to the first embodiment performed when trouble occurs in the active line 41 and the line is switched to the standby line 43.

The variable dispersion compensator 53 of the transponder 23 normally sets the amount of dispersion compensation of the active line 41 dynamically to the optimum value.

When it is determined that line trouble has occurred in the active line 41 due to the disconnection of an optical signal, frame asynchronization, the degradation of an error rate, etc., the transponder 23 inquires of the transponder 24 about the VDC setting value (corresponding to the dispersion compensation information) for the active line 42.

Upon receipt of the inquiry of the VDC setting value, the transponder 24 acquires the VDC setting value of its variable dispersion compensator 54, and transmits the VDC setting value to the transponder 23.

The transponder 23 outputs the received VDC setting value to its variable dispersion compensator 53, and the variable dispersion compensator 53 sets the received VDC setting value as the VDC setting value (amount of dispersion compensation) of the standby line 43. when the change of the VDC setting value is completed, the optical switch 51 switches a line to be used from the active line 41 to the standby line 43.

The setting time of the VDC setting value for the standby line 43 can be reduced by setting the VDC setting value for the standby line 43 accommodated in the same optical line as the active line 42 of the transponder 24 on the basis of the VDC setting value of the active line 42.

In the example above, the line is switched after completing the setting of the VDC setting value for the variable dispersion compensator 53, but the VDC setting value can be changed after the optical switch 51 switches to a standby line. In addition, the VDC setting value of the transponder 24 which uses a part of the optical line as an active line can be acquired in advance, and the VDC setting value can be stored in memory.

According to the first embodiment above, when line trouble occurs and a switch is made to a standby line, the time required to communicate a signal can be reduced.

Generally, a dispersion compensator arranged for optical fiber and each node has a wavelength characteristic. When the wavelength of the optical signal output from the transponder 21 is different from the wavelength of the optical signal output from the transponder 22, the amounts of residual dispersion in the receiving transponders 23 and 24 are also different.

The VDC setting value for the active line 42 of the transponder 24 is set for the residual dispersion in the wavelength of the optical signal transmitted through the active line 42. Therefore, if the VDC setting value for the standby line 43 of the transponder 23 is set equal to the VDC setting value of he active line 42, then there is the possibility that the VDC setting value cannot be the optimum value due to different wavelengths of their optical signals when the VDC setting value for the standby line 43 of the transponder 23 is set equal to the VDC setting value of the active line 42.

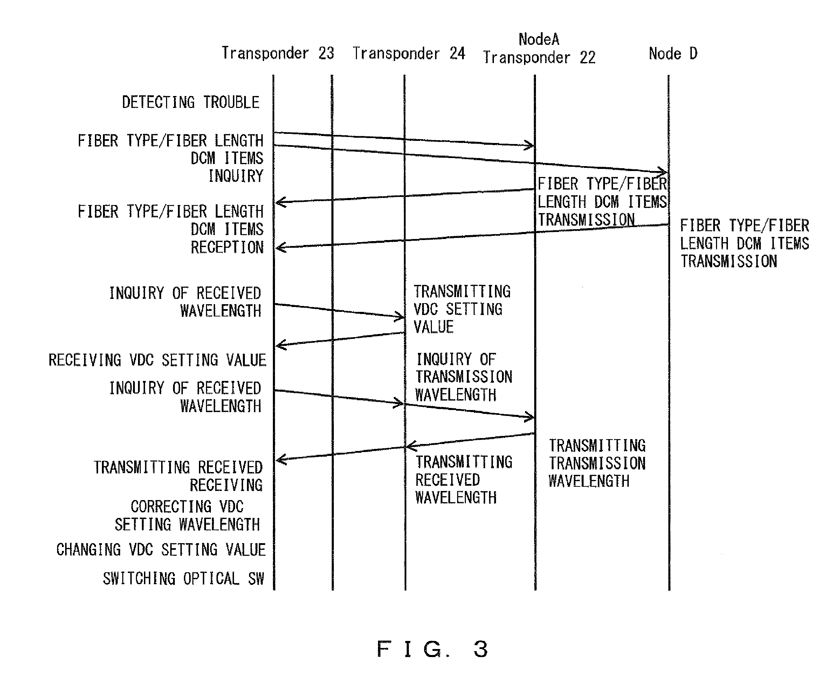

FIG. 3 illustrates the sequence of the operation according to the second embodiment to solve the problem above. The second embodiment is to consider the difference in wavelength of a signal, and corrects the VDC setting value by considering the difference in wavelength of a signal.

When the transponder 23 detects trouble with the active line 41, it inquires of the transmitting transponder 22 and the node D (wavelength division multiplexing apparatus 14) about the fiber type/fiber length, and DCM items. The data about the wavelength characteristic of a variable dispersion compensator can be obtained by designating the DCM items.

Upon receipt of the inquiry, the transponder 22 and the node D transmit their information about fiber type/fiber length and the DCM (dispersion compensator module) items.

Next, the transponder 23 inquires of the transponder 24 about a VDC setting value. Upon receipt of the inquiry, the transponder 24 transmits the VDC setting value of its variable dispersion compensator 54 to the transponder 23.

Next, the transponder 23 inquires of the transponder 24 about a received wavelength. The transponder 24 inquires of the transmitting transponder 22 about a transmission wavelength. Upon receipt of the inquiry, the transmitting transponder 22 transmits transmission wavelength data to the receiving transponder 24. The receiving transponder 24 transmits the wavelength data received from the transmitting transponder 24 as received wavelength data to the transponder 23.

The variable dispersion compensator 53 of the receiving transponder 23 corrects the VDC setting value to the wavelength on the basis of the VDC setting value received from the transponder 24 the received wavelength data. After the variable dispersion compensator 53 has switched from the active line 41 to the standby line 43, it further adjusts the VDC setting value.

Described below is the method of correcting the residual dispersion on the basis of the fiber type/fiber length and the wavelength characteristic of the variable dispersion compensator of the node on the reception path.
When the wavelength of the output light of the transmitting transponder 21 is $\lambda 1$, the wavelength of the output light of the transponder 22 is $\lambda 2$, and the residual dispersion at the input terminal of the transponder for the wavelength $\lambda$ is RD, the correction of the VDC setting value can be performed by the following equation.
$$VDC\ (\lambda 1)\ =\ VDC\ (\lambda\ 2)\ +\ [RD\ (\lambda 2)\ -\ RD\ (\lambda 1)]$$

$$(1)$$

The residual dispersion RD $(\lambda)$ indicates the residual dispersion at the input terminal of the transponder for the wavelength $\lambda$, and can be obtained by the following equation from a transmission line fiber dispersion Dfiber, and dispersion Ddcm of a dispersion compensator (dispersion-compensation fiber).
$$RD\ (\lambda)\ =\ [Dfiber1\ (\lambda)\ +\ Dfiber2\ (\lambda)\ ...\ +\ Dfibern]$$
$$+\ [Ddcm1\ (\lambda)\ +\ Ddcm2\ (\lambda)\ ...\ +\ Ddcmn\ (\lambda)]$$

$$(2)$$

Dfiber and Ddcm can be calculated from the following equation with respect to the wavelength $\lambda$.
$$Dfibern\ (\lambda)\ =\ [a0\ +\ a1\ \times\ (\lambda\ -\ \lambda\ ref)]\ \times\ FiberLengthn$$
$$Ddcmn\ (\lambda)\ =\ [b0\ +\ b1\ \times\ (\lambda\ -\ \lambda\ ref)]\ \times\ DcfLengthn$$

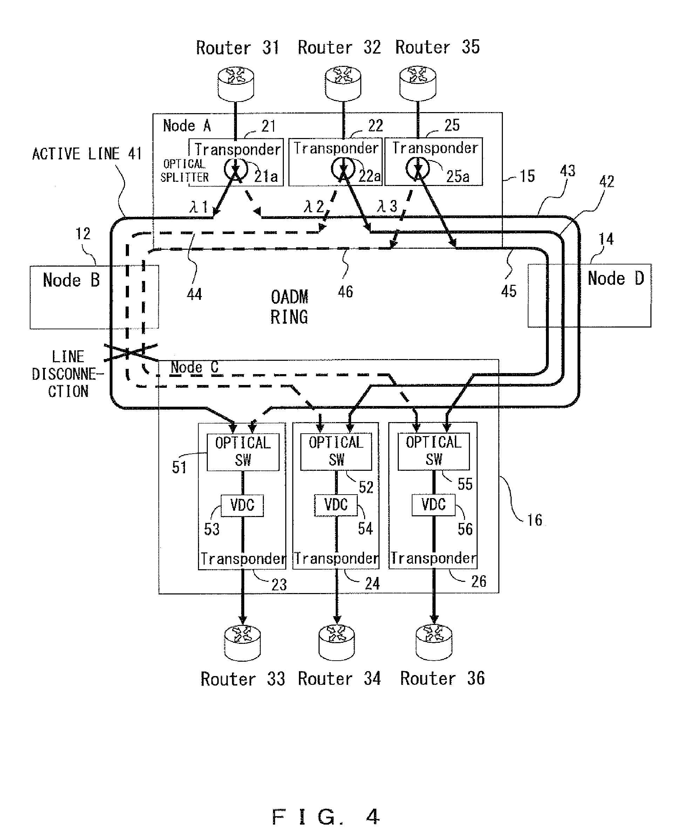

where a0 and a1 respectively indicate the dispersion coefficient (ps/nm/km) and a dispersion slope (secondary dispersion) coefficient (ps/nm2/km) of a transmission line fiber.
In the equation above, b0 and b1 respectively indicate the dispersion coefficient (ps/nm/km) and the dispersion slope (secondary dispersion) coefficient (ps/nm2/km) of the dispersion compensator (dispersion-compensation fiber). In the equation above, $\lambda$ref indicates the regulated wavelength (for example, 1550nm) for regulation of the dispersion coefficient.
By the equation above, the VDC setting value of the standby line for the optical signal of the wavelength $\lambda 1$ can be obtained.
Next, FIG. 4 is a configuration of the network according to the third embodiment. The third embodiment is to obtain the VDC setting value of a standby line through which a signal of another wavelength in the same line is transmitted from the VDC setting values for a plurality of active lines through which signals of different wavelengths are transmitted. The same element as that also illustrated in FIG. 1 is assigned the same reference numeral, and the explanation is omitted here.
A wavelength division multiplexing apparatus 15 illustrated in FIG. 4 includes three transponders 21, 22, and 25. The transponders 21, 22, and 25 convert the signals output from the routers 31, 32, and 35 into the signals of predetermined wavelength wavelengths $\lambda 1$, $\lambda 2$, and $\lambda 3$ for VDMs. These optical signals are branched in two directions by the optical splitters 21a, 22a, and 25a. The signal of the wavelength $\lambda 1$ branched by the optical splitter 21a is transmitted to the active line 41 and the standby line 43, the signal of the wavelength $\lambda 2$ branched by the optical splitter 22a is transmitted to the active line 42 and the standby line 44, and the signal of the wavelength $\lambda 3$ branched by the optical splitter 25a is transmitted to the active line 45 and the standby line 46.
A receiving wavelength division multiplexing apparatus 16 includes three transponders 23, 24, and 26. The transponder 26 includes an optical switch 55 for selecting one of the active line 45 and the standby line 46 and a variable dispersion compensator (VDC) 56 for compensating for the dispersion of an optical signal, and outputs a dispersion-compensated signal to a router 36.
If the VDC setting value for the signal of the wavelength $\lambda 2$ in the variable dispersion compensator 54 of the transponder 24 is VDC $(\lambda 2)$, and the VDC setting value for the signal of the wavelength $\lambda 3$ in the variable dispersion compensator 56 of the transponder 26 is VDC ($\lambda$3), then the VDC setting value VDC ($\lambda$1) for the wavelength $\lambda$1 can be obtained by the following equation.

$$VDC\ (\lambda 1) = VDC\ (\lambda 2) + \{VDC\ (\lambda 2) - VDC\ (\lambda 3)\} \times (\lambda 1 - \lambda 2) / (\lambda 2 - \lambda 3)$$

The ratio of the difference between the VDC setting value VDC ($\lambda$2) for the active line 42 through which the optical signal of the wavelength $\lambda$2 is transmitted and the VDC setting value VDC ($\lambda$3) for the active line 45 through which the optical signal of the wavelength $\lambda$3 is transmitted to the difference between the wavelength $\lambda$2 and the wavelength $\lambda$3 is calculated, and the resultant value is multiplies by the different between the wavelength $\lambda$1 and the wavelength $\lambda$2, thereby calculating the VDC setting value for the standby line 43 through which the optical signal of the wavelength $\lambda$1.

According to the above-mentioned third embodiment, a VDC setting value can be obtained for the transmission line through which signals of different wavelengths are transmitted, and an appropriate VDC setting value can be calculated from the VDC setting values for the standby line through which optical signal having different wavelengths are transmitted. Thus, an error of the VDC setting value from a difference in wavelength of an optical signal can be reduced and the adjustment of the VDC setting value can be completed in a shorter time.

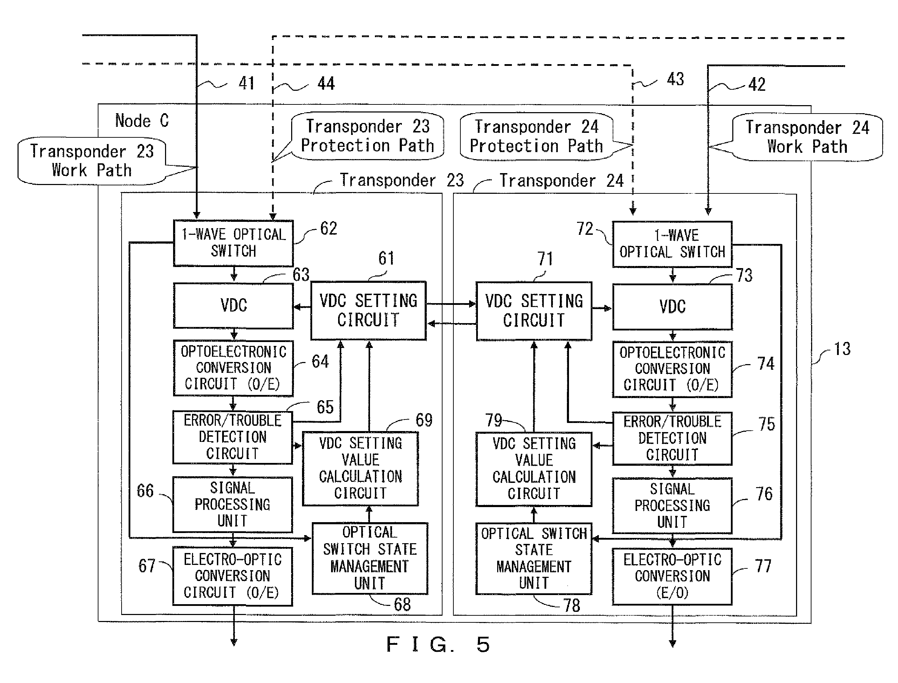

Next, FIG. 5 is a configuration of the wavelength division multiplexing apparatus 13 according to the fourth embodiment of the present invention. The standby line 43 in FIG. 5 is accommodated in the same optical line as the active line 42, and the standby line 44 is accommodated in the same optical line as the active line 41. In the description below, the elements also illustrated in FIG. 1 are assigned the same reference numerals and the explanation is omitted here.

In the fourth embodiment, a VDC setting circuit 61 of the transponder 23 acquires the VDC setting value (dispersion compensation information) from a VDC setting circuit 71 of the transponder 24, and the VDC setting value of the standby line 44 is determined on the basis of the VDC setting value.

The VDC setting circuit 61 acquires the VDC setting value of the VDC setting circuit 71 of the transponder 24, and sets the acquired value as the VDC setting value of a variable dispersion compensation circuit 63 of the own device. A 1-wave optical switch 62 (corresponding to the optical switch 51 in FIG. 1) selects one of the active line (work path) 41 and the standby line (protection path) 44, and outputs the selected circuit to the variable dispersion compensation circuit (VDC) 63. The variable dispersion compensation circuit (corresponding to the VDC 53 in FIG. 1) 63 compensates for the dispersion of the optical signal on the basis of the VDC setting value output from the VDC setting circuit 61.

An optoelectronic conversion circuit 64 converts an optical signal into an electric signal, and an error/trouble detection circuit 65 detects an error of an optical signal and the trouble of a line from the degradation of an error etc. A signal processing unit 66 converts the frame format of the received signal into the frame format of the signal of a client side. An electro-optic conversion circuit 67 outputs an electric signal into an optical signal and outputs the obtained signal.

An optical switch state management unit 68 monitors the state of the 1-wave optical switch 62, and outputs the information about which the 1-wave optical switch 62 has selected, the active line 41 or the standby line 44.

A VDC setting value calculation circuit 69 calculates the VDC setting value from the residual dispersion value determined by the physical condition of a transmission line, adjusts the VDC setting value for the best quality of the main signal on the basis of the data indicating the signal quality output from the error/trouble detection circuit 65, and outputs the adjusted value to the VDC setting circuit 61.

The transponder 24 includes a VDC setting circuit 71, a 1-wave optical switch 72, a variable dispersion compensation circuit 73, an optoelectronic conversion circuit 74, an error/trouble detection circuit 75, a signal processing unit 76, an optical switch state management unit 78, and a VDC setting value calculation circuit 79. The functions of the circuit are the same as those of each circuit of the transponder 23.

When the trouble of the active line 41 is detected in the error/trouble detection circuit 65 of the transponder 23, the VDC setting circuit 61 acquires the VDC setting value for the active line 42 from the VDC setting circuit 71 of the transponder 24, and outputs the acquired VDC setting value to the variable dispersion compensation circuit 63. The variable dispersion compensation circuit 63 dispersion-compensates the main signal on the basis of the VDC setting value. Then, the VDC setting value calculation circuit 69 finely adjusts the data indicating the quality of the signal detected by the error/trouble detection circuit 65, for example, such that the frequency of the frame asynchronization of the main signal, the frequency of the asynchronization with reference to an error rate etc., and an error rate can be minimized, and the finely adjusted value is output to the VDC setting circuit 61. The VDC setting circuit 61 outputs the corrected VDC setting value to the variable dispersion compensation circuit 63 for dispersion-compensation. By repeating the above-mentioned operations, the optimum dispersion compensation value for the standby line 44 can be determined.

According to the fourth embodiment, for example, when trouble occurs in the active line 41, the VDC setting value for the active line 42 is acquired from the VDC setting circuit 71 of the transponder 24, and the VDC setting value of the standby line 44 accommodated in the same physical line as the active line 42 can be set on the basis of the acquired VDC setting value. Therefore, since the optimum VDC setting value can be acquired in a short time, the restoration time of trouble can be reduced when line trouble is detected and a switch is made to a standby line.

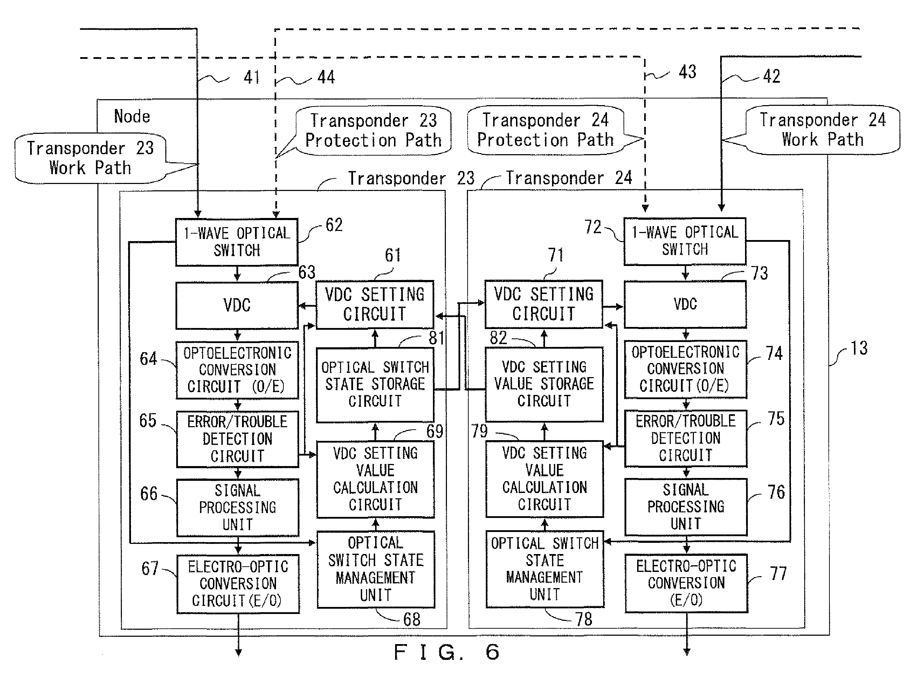

Next, FIG. 6 is a configuration of the wavelength division multiplexing apparatus 13 according to the fifth embodiment of the present invention. According to the fifth embodiment, the VDC setting value stored in a VDC setting value storage circuit 82 of another transponder 24 is acquired by the VDC setting circuit 61, and the VDC setting value of the standby line 44 is set on the basis of the acquired value.

The standby line 44 of the transponder 23 is accommodated in the same physical line (optical line) as the active line 42 of the transponder 24. The same circuit block as in FIG. 5 is assigned the same reference numeral, and the explanation is omitted here.

In FIG. 6, a VDC setting value storage circuit 81 of the transponder 23 stores the VDC setting value calculated by the VDC setting value calculation circuit 69. The VDC setting value stored in the VDC setting value storage circuit 81 is output to the VDC setting circuit 61 of the own device, and output to the VDC setting circuit 71 of another transponder 24.

Similarly, the transponder 24 includes the VDC setting value storage circuit 82 for storing the VDC setting value calculated by the VDC setting value calculation circuit 79. The VDC setting value stored in the VDC setting value storage circuit 82 is output to the VDC setting circuit 71 and the VDC setting circuit 61 of another transponder 23.

The VDC setting circuit 61 of the transponder 23 acquires the VDC setting value stored in the VDC setting value storage circuit 81 of the own device when the line is in the normal state, and outputs the acquired VDC setting value to the variable dispersion compensation circuit 63.

On the other hand, when trouble of the active line 41 occurs in the error/trouble detection circuit 65, or before the trouble is detected, the VDC setting circuit 61 acquires the VDC setting value stored in the VDC setting value storage circuit 82 of another transponder 24, and outputs the acquired VDC setting value to the variable dispersion compensation circuit 63.

When line trouble is detected, the 1-wave optical switch 62 switches the line to the standby line 44. The VDC setting value calculation circuit 69 adjusts the VDC setting value such that the error rate etc. of the main signal detected by the error/trouble detection circuit 65 can be improved, and outputs the adjusted VDC setting value to the VDC setting value storage circuit 81. The VDC setting circuit 61 outputs to the variable dispersion compensation circuit 63 the VDC setting value newly written to the VDC setting value storage circuit 81. The variable dispersion compensation circuit 63 dispersion-compensates for the main signal on the basis of the VDC setting value. The error rate etc. of dispersion-compensated main signal is calculated by the error/trouble detection circuit 65, and the adjustment of the VDC setting value is further performed on the basis of the calculation result.

According to the fifth embodiment above, the transponder 23 can acquire in advance (or when trouble occurs) the VDC setting value for the active line 42 accommodated in the same physical line as the standby line 44 from the VDC setting value storage circuit 82 of another transponder 24. Therefore, when the line trouble is detected, the optimum VDC setting value for compensation of the dispersion of the optical signal in the standby line 44 can be quickly output to the variable dispersion compensation circuit 63. Thus, the restoration time of the line trouble can be reduced.

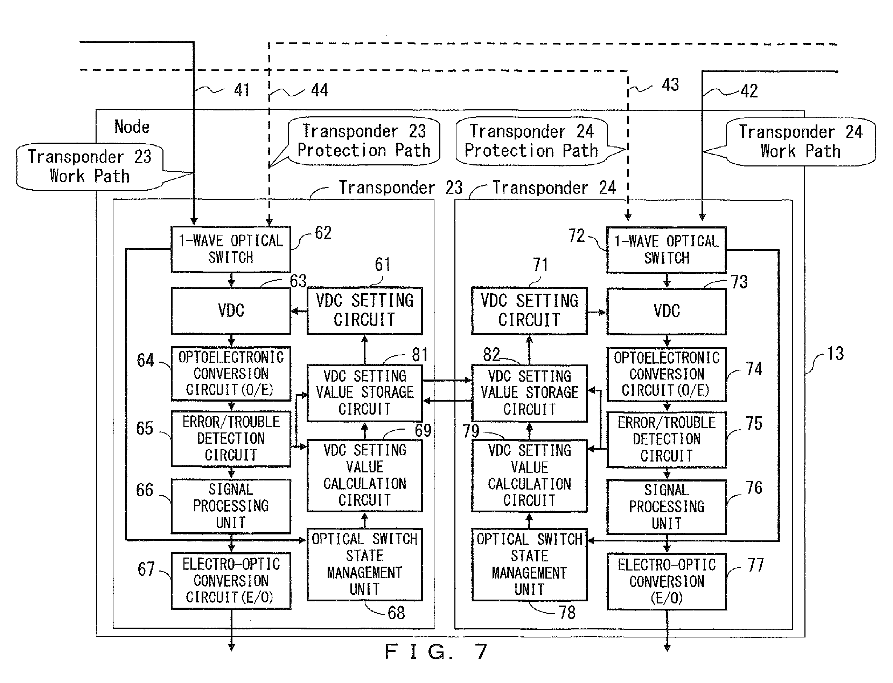

Next, FIG. 7 is a configuration of the wavelength division multiplexing apparatus 13 according to the sixth embodiment of the present invention. In the sixth embodiment, the VDC setting value storage circuit 81 acquires the VDC setting value of the VDC setting value storage circuit 82 of another transponder 24, and outputs the acquired VDC setting value to the VDC setting circuit 61.

The standby line 43 of the transponder 23 in FIG. 7 is accommodated in the same physical line as the active line 42 of the transponder 24. Hereafter, the same circuit block is assigned the ame reference numeral, and the explanation is omitted here.

The VDC setting value storage circuit 81 of the transponder 23 in FIG. 7 stores the VDC setting value updated after the communication of signals of the active line 41. Similarly, the VDC setting value storage circuit 82 of the transponder 24 stores the VDC setting value after the communication of the signal of the active line 42.

The VDC setting value storage circuit 81 of the transponder 23 communicates with the VDC setting value storage circuit 82 of the transponder 24 directly or through another circuit when a normal operation is performed, acquires and stores the VDC setting value for the active line 42 stored in the VDC setting value storage circuit 82.

The VDC setting circuit 61 reads the VDC setting value stored in the VDC setting value storage circuit 81, and outputs the VDC setting value to the variable dispersion compensation circuit 63. The variable dispersion compensation circuit 63 dispersion-compensates for the main signal on the basis of the VDC setting value.

According to the sixth embodiment above, the VDC setting value storage circuit 81 of the transponder 23 acquires in advance (or when trouble occurs) the VDC setting value for the active line 42 stored in the VDC setting value storage circuit 82 of another transponder 24, and can set the VDC setting value of the standby line 44 on the basis of the acquired VDC setting value. Thus, the restoration time required when line trouble occurs can be reduced. In the sixth embodiment, since the VDC setting value storage circuit 81 of the transponder 23 can communicate data directly (or through a communication interface) with the VDC setting value storage circuit 82 of another transponder 24, an appropriate VDC setting value for the standby line 44 can be acquired before trouble occurs. Thus, the restoration time for the trouble can be further reduced.

In the above-mentioned fourth though sixth embodiments, the VDC setting circuit 61, the VDC setting value storage circuit 81, etc. are not VDC setting values themselves, but the information (dispersion compensation information) for calculation of the VDC setting value can be acquired or stored.

Next, the method for transferring the VDC setting value of each transponder in a network to another transponder on a transmission line is described below.

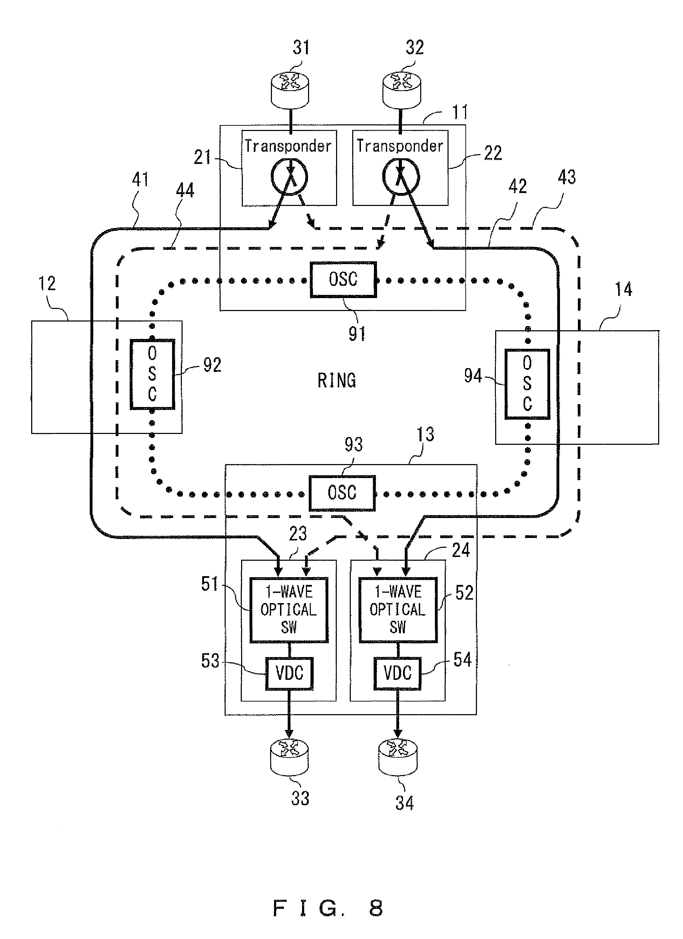

FIG. 8 is a configuration of a network according to the seventh embodiment of the present invention. The seventh embodiment is to transfer the information for dispersion-compensation using another line other than the line for transmission of a main signal (OSC (optical supervisor channel) used in transmitting monitoring information). Hereafter, the same element also illustrated in FIG. 1 is assigned the same reference numeral, and the explanation is omitted here.

The wavelength division multiplexing apparatus can be provided with a function called a control plane for easy maintenance and management of the entire network. The control plane function controls and monitors a transponder using a controlling and monitoring channel independent of the main signal called an OSC. In the seventh embodiment, using the control plane function, the VDC setting value of a transponder, the direction of an optical switch, the wavelength of an optical signal, a fiber type, a fiber length (span length) (these pieces of information are collectively called dispersion information) and a node ID (ID of a wavelength division multiplexing apparatus) are transmitted to all wavelength division multiplexing apparatuses in the network.

Each of the wavelength division multiplexing apparatuses 11 through 14 includes OSC units 91 through 94. The OSC units 91 through 94 transmit dispersion information configured by all or a part of a VDC setting value of a transponder, the direction of an optical switch, wavelength information, a fiber type, a fiber length (distance of a transmission line), etc. together with a node ID to an OSC. Simultaneously, the dispersion information transferred from another apparatus is acquired, and the acquired dispersion information is stored in the storage device etc. of the transponder. Otherwise, the optimum VDC setting value for the standby line of the own device is calculated in advance from the dispersion information about another transponder, and stored in a storage circuit.

According to the seventh embodiment of the present invention, since the VDC setting value (or information for calculation of a VDC setting value) etc. of each transponder can be transmitted to all apparatuses using the OSC, a transponder which has detected line trouble can set the optimum VDC setting value for the standby line of the own device according to the dispersion information acquired through the OSC in a short time. In addition, since each transponder can also calculate in advance the VDC setting value for the standby line from the dispersion information acquired through the OSC, the restoration time for a switch from the active line to the standby line can be reduced.

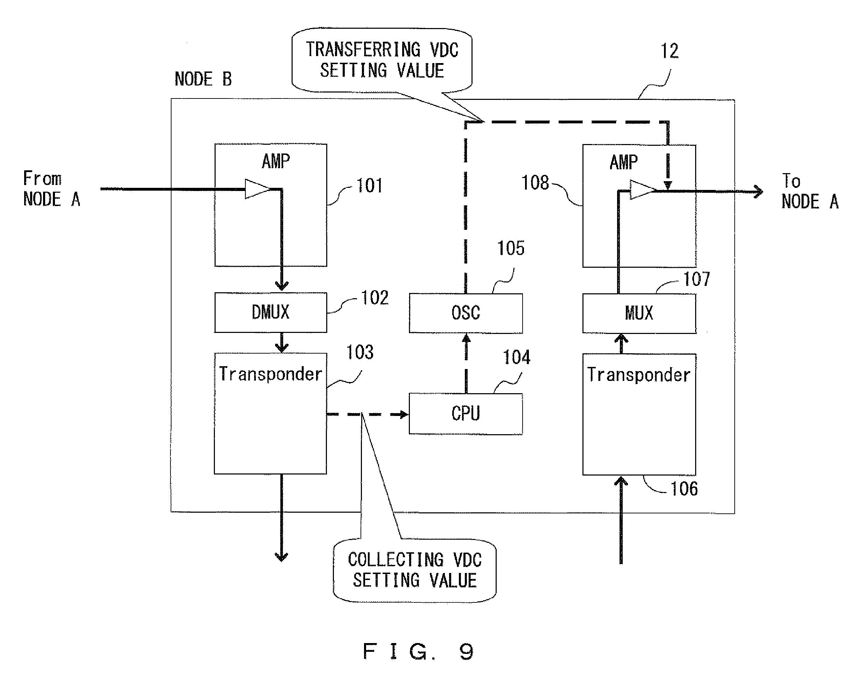

FIG. 9 is an example of a configuration of the wavelength division multiplexing apparatus according to the seventh embodiment described above. The wavelength division multiplexing apparatus in FIG. 9 corresponds to the wavelength division multiplexing apparatus 12 of the node B in the transmission line illustrated in FIG. 1. FIG. 1 is an example of a case in which the main signal passes through the node B, but FIG. 9 illustrates a case in which the main signal transmitted from the node A is received by a transponder 103 of the node B and output to a router or a line not illustrated in the attached drawings, and the main signal received by another transponder 106 is output to the node C (wavelength division multiplexing apparatus 13).

The wavelength division multiplexing apparatus 12 includes an optical amplifier 101 for amplifying an optical signal from the wavelength division multiplexing apparatus 11 (node A), a demultiplexer 102 for demultiplexing an amplified optical signal, a transponder 103 for compensating for the dispersion of the optical signal, a CPU 104 for collecting the VDC setting value of the transponder 103, and an OSC unit 105 for converting dispersion information such as a VDC setting value etc. output from the CPU 104 into a predetermined data format and transmitting the information to the OSC.

The wavelength division multiplexing apparatus 12 further includes a transponder 106 for receiving an optical signal input from a router or other lines not illustrated in the attached drawings and compensating for dispersion, a multiplexer 107 for multiplexing an output signal of the transponder 106, and an optical amplifier 108 for amplifying the output of the multiplexer 107. The transponders 103 and 106 have a configuration illustrated in, for example, FIG. 5, 6, or 7.

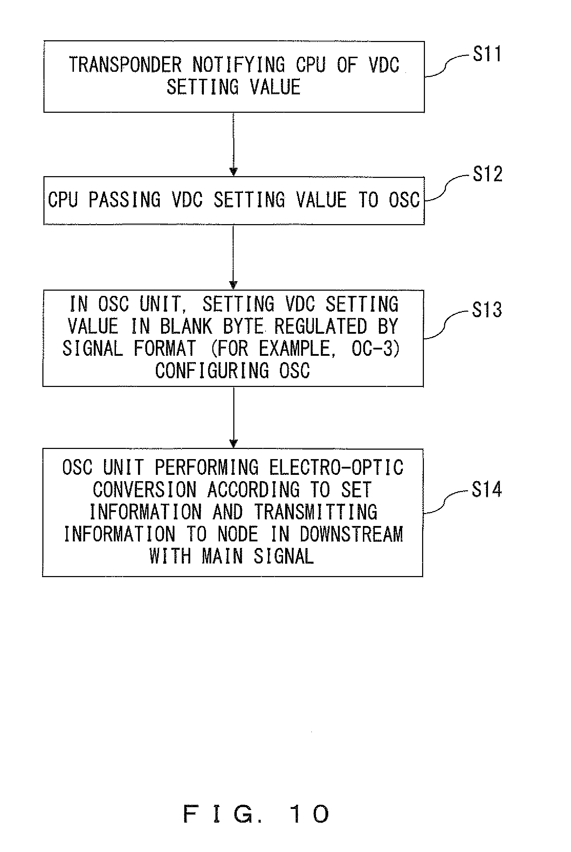

The operation of the process by the CPU 104 is described below with reference to the flowchart in FIG. 10. The transponder 103 notifies the CPU 104 of the VDC setting value (S11 in FIG. 10). The CPU 104 outputs the received VDC setting value to the OSC unit 105 (S12). The OSC unit 105 sets the VDC setting value in a blank byte of a predetermined signal format (for example, OC-3 of SONET) (S13).

Next, the OSC unit 105 performs an electro-optic conversion on the data of a predetermined signal format, and transmits the converted optical signal to a wavelength division multiplexing apparatus in the downstream (S14). In the process above, for example, the OSC unit 93 acquires dispersion information such as a VDC setting value, a signal wavelength, a fiber length, etc. transferred from the OSC units 91 through 94, and can obtain a corresponding path according to the acquired dispersion information, for example, the VDC setting value for the active line 42 for couple of the transponder 22 to the transponder 24. Then, using the VDC setting value of the active line 42, an appropriate VDC setting value for the standby line can be set using the VDC setting value of the active line 42. Thus, when line trouble occurs and is to be switched to a standby line, the time required to set the VDC setting value of the standby line as the optimum value can be reduced.

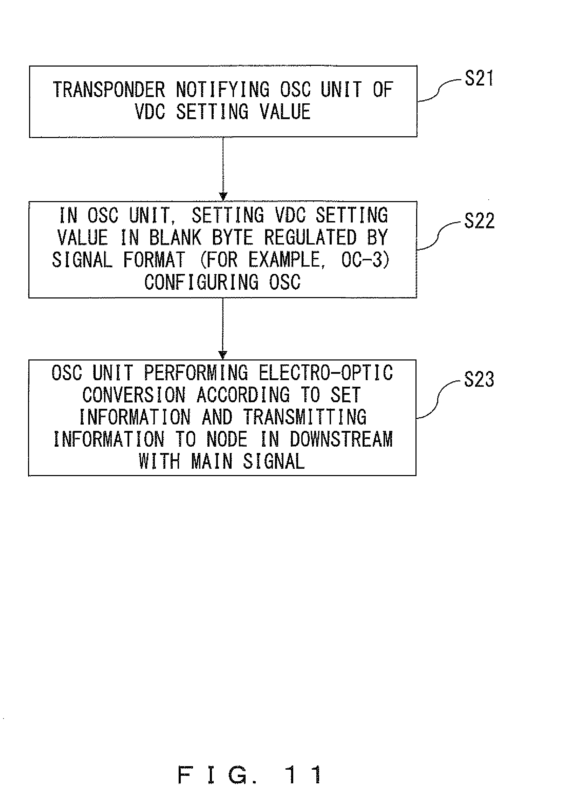

FIG. 11 is a flowchart of the operation of the process performed when the transponder 103 notifies the OSC unit 105 of the VDC setting value.

The transponder 103 notifies the OSC unit 105 of the VDC setting value (S21 in FIG. 11). The OSC unit 105 sets the VDC setting value in the blank byte of data of a predetermined signal format (for example, OC-3 of SONET) (S22).

Next, the OSC unit 105 performs an electro-optic conversion the data of a predetermined signal format, and transmits the VDC setting value (or other information) to a node in a downstream using an OSC (S23).

In the processes above, since the receiving transponder can acquire the VDC setting value etc. for the active line in each transponder in a transmission line, the optimum value of the VDC setting value for the standby line accommodated in the same physical line as the active line can be obtained in a short time. Thus, the restoration time for line trouble can be reduced.

In the above-mentioned seventh embodiment, each transponder can transmit the dispersion information about the own device to another transponder using the OSC. Then, each transponder can store the received dispersion information in the storage circuit of the own device, calculate and store in advance the VDC setting value for the standby line of the own device. Thus, when line trouble occurs, a variable dispersion compensator can determine the optimum dispersion compensation value for the standby line in a short time, thereby reducing the restoration time of line trouble.

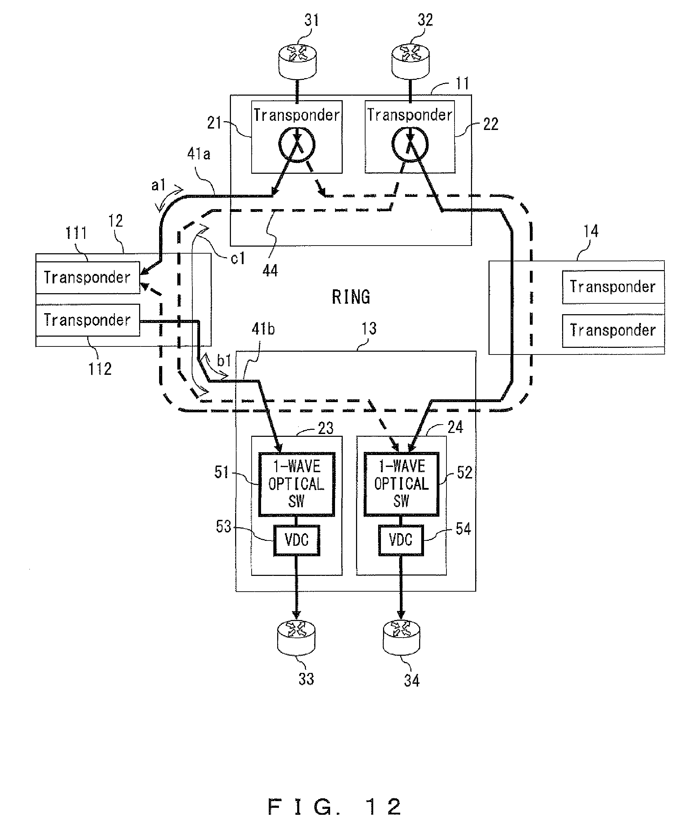

Next, FIG. 12 is a configuration of the network according to the eighth embodiment. The eighth embodiment is to allow each transponder to transmit dispersion information through digital wrapper, SONET (synchronous optical network), DCC (data communication channel), etc.

The wavelength division multiplexing apparatus can use the technology called digital wrapper capable of performing a long-distant transmission. The digital wrapper indicates a frame format in which data is enclosed by a channel header and the data of forward error correction FEC. The eighth embodiment is to transmit dispersion information using the digital wrapper or a blank byte of the overhead of DCC.

The case in which dispersion information is transmitted using the digital wrapper is described below with reference to FIG. 12. In the description below, the same element in FIG. 1 is assigned the reference numeral, and the explanation is omitted here.

The wavelength division multiplexing apparatus 12 includes transponders 111 and 112. The digital wrapper is generated and terminated in each transponder.

The transponder 111 inserts the dispersion information configured by all or a part of the VDC setting value for a path a1 of the active line 41 with the transponder 21, the direction of an optical switch, wavelength information, a fiber type, and a fiber length, and a node ID into a blank byte of the overhead of the digital wrapper, and transmits them to another transponder.

The transponder 23 inserts the dispersion information configured by all or a part of the VDC setting value for a path b1 of the active line 41 with the transponder 112, the direction of an optical switch, wavelength information, a fiber type, and a fiber length, and a node ID into a blank byte of the overhead of the digital wrapper, and transmits them to another transponder.

The transponder 24 can calculate the VDC setting value for the path c1 of the standby line 44 accommodated in the same physical line on the basis of the VDC setting value of the path a1 transmitted from the transponder 111 and the VDC setting value of the path b1 transmitted from the transponder 23.

According to the eighth embodiment above, each transponder can acquire the VDC setting value of the transponder in the upstream (transmitting side) of the own device by transmitting the VDC setting value of each transponder to a network using the digital wrapper. Therefore, before line trouble occurs or after it has occurred, an appropriate VDC setting value can be set for the standby line in the variable dispersion compensator. Thus, the restoration time of the line trouble can be reduced.

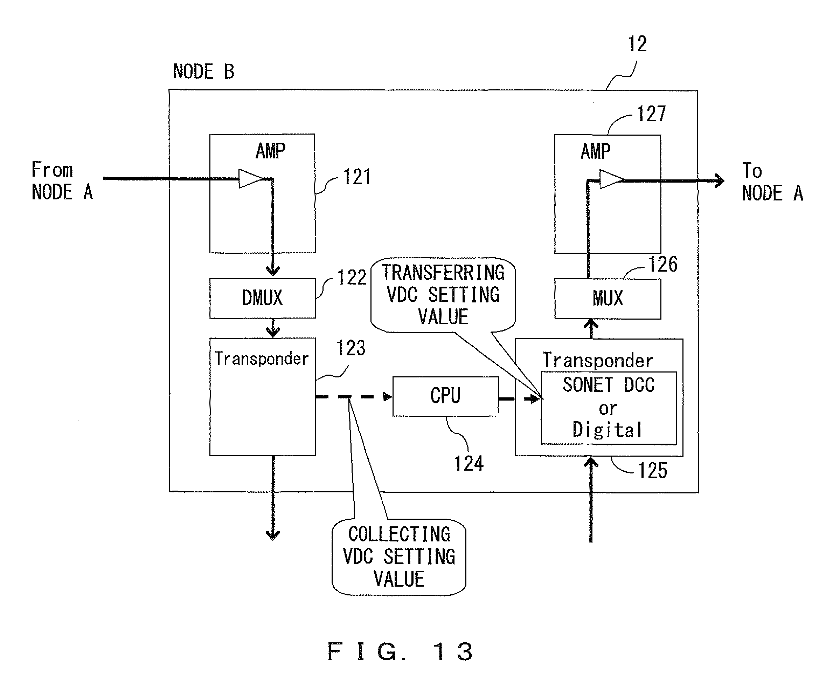

FIG. 13 is an example of a configuration of the wavelength division multiplexing apparatus 12 according to the eighth embodiment above. The wavelength division multiplexing apparatus in FIG. 13 corresponds to the wavelength division multiplexing apparatus 12 (node B) in the transmission line in FIG. 1. FIG. 1 is an example of the case in which a main signal passes through the node B. FIG. 13 illustrates the case in which a main signal transmitted from the node A is received by a transponder 123 of the node B, and a main signal input to a transponder 125 from a router or another line not illustrated in the attached drawings is output to the node C (wavelength division multiplexing apparatus 13).

The wavelength division multiplexing apparatus 12 includes an optical amplifier 121 for amplifying an optical signal from the wavelength division multiplexing apparatus 11 (node A), a demultiplexer 122 for demultiplexing the amplified optical signal, the transponder 123 for performing dispersion-compensation, an optoelectronic conversion, etc., a CPU 124 for collecting the VDC setting value of the transponder 123 and outputting it to the transponder 125, the transponder 125, a multiplexer 126 for multiplexing the optical signal, and an optical amplifier 127 for amplifying the output light of the multiplexer 126 and transmitting the light to the transmission line coupled to the node C (wavelength division multiplexing apparatus 13). The transponders 123 and 125 have a configuration illustrated in, for example, FIG. 5, 6, or 7.

When the CPU 124 acquires the VDC setting value for the active line 41 of the transponder 123, the VDC setting value is output to the transponder 125. The transponder 125 inserts the VDC setting value etc. into a blank byte of a known signal format such as SONET DCC etc. and transmits it to the transmission line.

According to the eighth embodiment above, the VDC setting value etc. of each transponder is transmitted using a blank byte of a known signal format, received and stored by each transponder, thereby setting an appropriate VDC setting value for a standby line in the variable dispersion compensator. Thus, the restoration time of line trouble can be reduced.

Next, in the above-mentioned seventh and eighth embodiments, the signal formats of the OSC, the digital wrapper, SONET DCC are briefly described below.

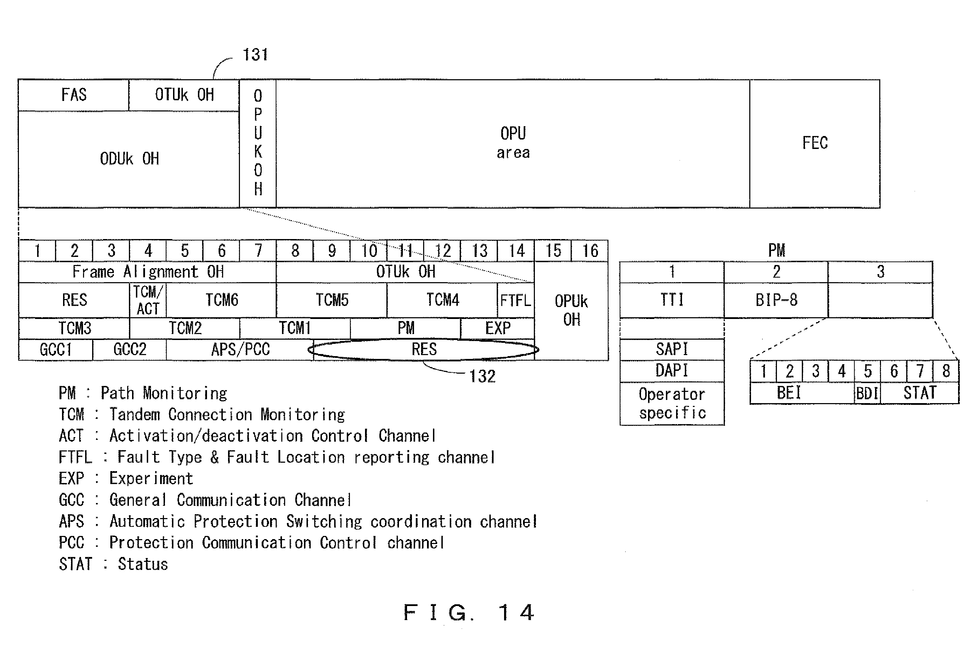

FIG. 14 illustrates a frame format of the digital wrapper regulated in the ITU-T, G709.

As illustrated in FIG. 14, the frame format of the digital wrapper has a configuration of wrapping data with an overhead and an error correction code FEC (forward error correction). In the eighth embodiment, when dispersion information is transmitted using the digital wrapper, the VDC setting value of each transponder, wavelength information, etc. are inserted into a RES (reserved for future international standardization) 132 not currently used in an ODUk (optical channel data unit) OH (overhead) 131 in FIG. 14, and transmitted.

When the dispersion information is transmitted using the OSC in the seventh embodiment, for example, it is transmitted through a controlling channel by inserting the VDC setting value of a transponder, wavelength information about a signal, etc. into the payload of the SONET frame illustrated in FIG. 5.

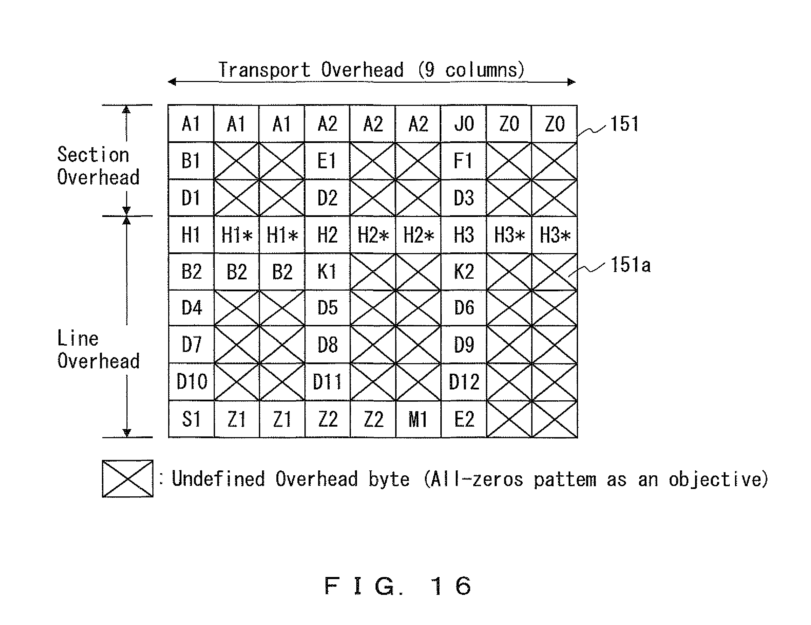

If dispersion information is transmitted using the SONET DCC, it is transmitted by inserting the VDC setting value, wavelength information about a signal, etc. into an undefined byte 151a of the transport overhead 151 marked with × in FIG. 16.

The information to be transmitted by each transponder in a predetermined signal format is not limited to the VDC setting value itself, but can be information for calculation of the VDC setting value on the reception side.

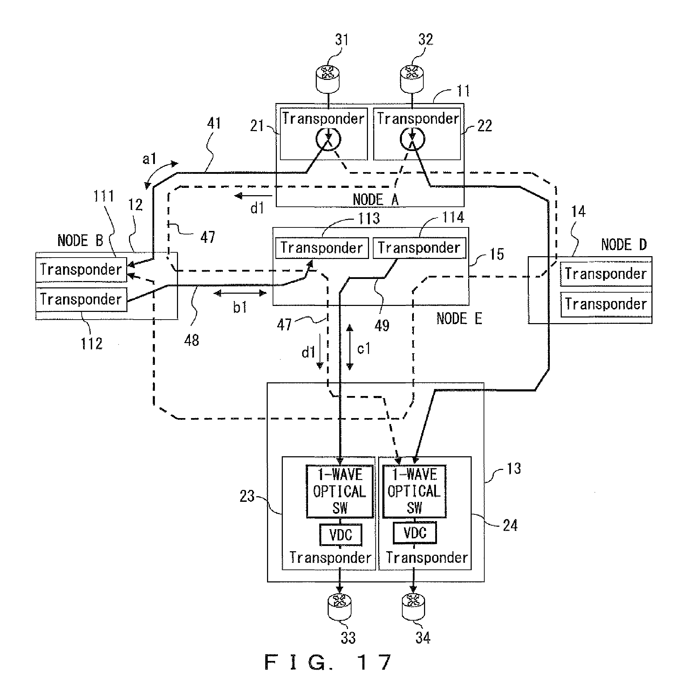

FIGS. 17 through 19 illustrate other network formats than ring networks. In the explanation below, the same elements in FIG. 1 and others are assigned the same reference numerals, and the detailed description is omitted here.

FIG. 17 is an example of a network of a mesh configuration. The optimum dispersion compensation value of the standby line can also be set for the network with the mesh configuration in the same method as in the above-mentioned embodiment.

The network with the mesh configuration in FIG. 17 has the wavelength division multiplexing apparatus 15 (node E) in addition to each node in FIG. 1, and the wavelength division multiplexing apparatus 15 has the transponders 113 and 114.

A standby line 47 of the transponder 22 passes through the wavelength division multiplexing apparatuses 12 and 15, and input to the transponder 24 of the wavelength division multiplexing apparatus 13. On the other hand, the path a1 of the active line 41 of the transponder 21 is input to the transponder 111 of the wavelength division multiplexing apparatus 12, and the path b1 of the active line 48 of the transponder 112 is input to the transponder 113 of the wavelength division multiplexing apparatus 15. Furthermore, the path c1 of an active line 49 of the wavelength division multiplexing apparatus 15 (node E) is input to the transponder 23 of the wavelength division multiplexing apparatus 13.

Therefore, when the VDC setting value (including the residual dispersion in the wavelength division multiplexing apparatus 12) for the path a1 in the transponder 111 and the VDC setting value for the path c1 in the transponder 23 are obtained, an appropriate dispersion compensation value for the path d1 of the 47 in the same physical line as the paths can be calculated.

For example, the wavelength division multiplexing apparatus 12 insert s the VDC setting value (or dispersion compensation value) for the path a1 of the transponder 111 into the blank byte of a predetermined data format, and transmits the value to each wavelength division multiplexing apparatus. Similarly, the wavelength division multiplexing apparatus 15 inserts the VDC setting value for the path b1 of the transponder 113 into the blank byte of the predetermined data format, and transmits it to the network. The transponder 23 inserts the VDC setting value for the path c1 directly into the transponder 24 or into the blank byte of the predetermined data format and outputs it. The transponder 24 obtains the VDC setting value of the path d1 of the standby line 47 by adding the VDC setting value of the path a1, the VDC setting value of the path b1, and the VDC setting value of the path c1.

In the network of the above-mentioned mesh configuration, the transponder 24 can calculate a preferred VDC setting value of the standby line 47 in advance by acquiring the dispersion compensation value of the paths a1, b1, and c1 respectively from the transponders 12, 15, and 23. Thus, the restoration time after the switch to the standby line 47 until the communication of signals can be reduced.

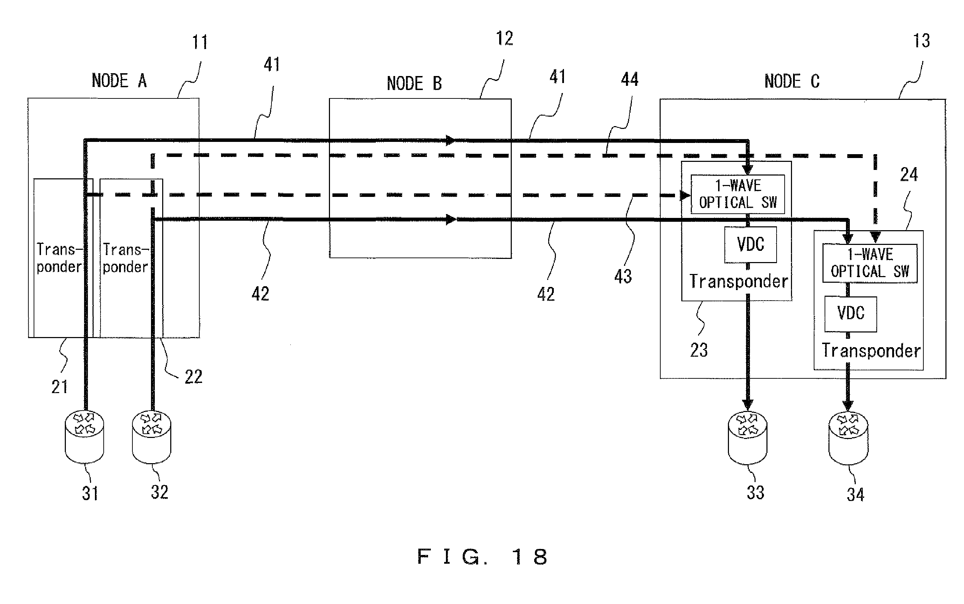

FIG. 18 is an example of a network with the linear configuration. In the example in FIG. 18, a preferred VDC setting value of the standby line 44 accommodated in the same optical line can be calculated from the VDC setting value for the active line 41 of the transponder 23 when the active line 41 and the standby line 44 are accommodated in the same physical line. The transponder 24 acquires a VDC setting value for the active line 41 from the transponder 23, and the VDC setting value for the standby line 44 can be set on the basis of the acquired value.

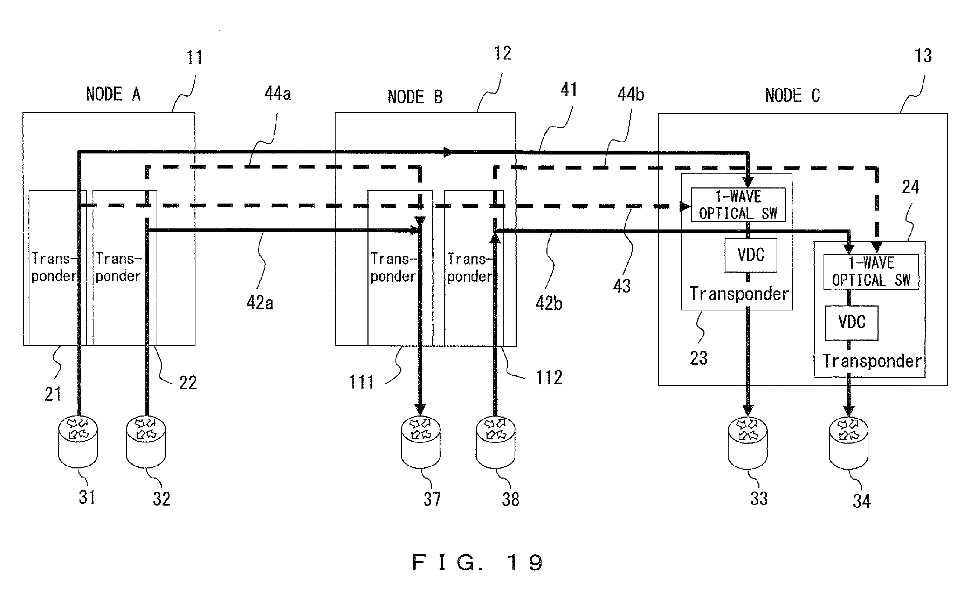

FIG. 19 is another example of a network with the linear configuration. In the example in FIG. 19, the wavelength division multiplexing apparatus 12 has the transponder 111 and the transponder 112, an active line 42a and its standby line 44a are input to the wavelength division multiplexing apparatus 11, an active line 42b of the transponder 112 is input to the transponder 24. The active line 41 and its standby line 43 passes through the wavelength division multiplexing apparatus 12 from the transponder 21, and is input to the transponder 23.

Assume that the standby line 43 which couples the transponder 21 to the transponder 23 is accommodated in the same physical lines as the active lines 42a and 42b. The transponder 23 can estimate the VDC setting value of the standby line 43 by acquiring the VDC setting value for the active line 42a of the wavelength division multiplexing apparatus 11 and the VDC setting value for the active line 42b of the transponder 24.

In the network with the above-mentioned linear configuration, the transponder 23 can calculate in advance a preferred VDC setting value of the standby line 43 by acquiring the VDC setting value (or the value indicating residual dispersion) for the active line 42a of the transponder 111 and the VDC setting value for the active line 42b of the transponder 24. Thus, when line trouble occurs, a signal can be communicated in a short time by switching to the standby line 43, thereby reducing the restoration time of the trouble.

The method for each transponder acquiring a VDC setting value etc. in the network with the mesh configuration or the linear configuration can be any of the above-mentioned first through eighth embodiments.

The present invention is not limited to the above-mentioned embodiment, but can be configured as follows.

(1) A transponder is not limited to the circuit configuration of the above-mentioned embodiments, but can be of any others. The number of transponders is not limited to two, but can be any optional numbers.
(2) The function of a transponder acquiring a VDC setting value of another transponder is performed not only by hardware, but can be realized by software.

**Claims**

1. A wavelength division multiplexing apparatus used in a network in which a transmitting optical transmission device and a receiving optical transmission device are coupled via an active line and a standby line, comprising:

   an acquisition device acquiring dispersion compensation information for the active line accommodated in a same optical line as the standby line from another optical transmission device; and
   a dispersion compensation device compensating for dispersion of an optical signal transmitted through the standby line according to the dispersion compensation information acquired by the acquisition device.

2. The apparatus according to claim 1, wherein
   the acquisition device acquires dispersion compensation information stored in a storage device of the other optical transmission device before trouble is detected.

3. The apparatus according to claim 1, wherein:

   the acquisition device receives dispersion compensation information transmitted from the other optical transmission device to the network; and
   the dispersion compensation device dispersion-compensates for the standby line according to the dispersion compensation information received by the acquisition device.

4. The apparatus according to claim 1, wherein
   the acquisition device corrects the dispersion compensation information received from the other optical transmission device depending on a difference between a wavelength of the optical signal received by the other optical transmission device and a wavelength of the optical signal received by an own device, and performs a calculation using the corrected value as the dispersion compensation information for the standby line.

5. The apparatus according to claim 1, 2, or 3, further comprising
   an output device transmitting the dispersion compensation information about the dispersion compensation device to the other optical transmission device on the network using an OSC (optical supervisor channel).

6. The apparatus according to claim 1, wherein:

   in the network, a first optical transmission device on a transmitting side and a second optical transmission device on a receiving side are coupled through a first active line and a first standby line accommodated in different optical lines, and a second active line of a third optical transmission device on the receiving side is accommodated in a same optical line as the first standby line;
   the acquisition device acquires dispersion compensation information for the second active line from the third optical transmission device; and
   the dispersion compensation device compensates for dispersion of an optical signal transmitted through the first standby line according to dispersion compensation information acquired by the acquisition device.

7. The apparatus according to claim 1, 2, or 3, further comprising
   an output device inserting the dispersion compensation information about the dispersion compensation device into a blank byte of an overhead of a signal format of a main signal and transmitting the information to the other optical transmission device on the network.

8. The apparatus according to claim 1, 2, or 3, further comprising
   a storage device storing dispersion compensation information in the dispersion compensation device and outputting the stored dispersion compensation information to the other optical transmission device, wherein
   the acquisition device acquires dispersion compensation information for the active line accommodated in the same optical line as the standby line of the own device from the storage device of the other optical transmission device.

9. The apparatus according to claim 1, 2, or 3, wherein:

   the acquisition device comprises a setting device for setting a dispersion compensation value of the dispersion compensation device, and outputting the set dispersion compensation value to the other optical transmission device; and
   the setting device acquires a dispersion compensation value for the active line accommodated in the same optical line as the standby line of the own device from the setting device of the other optical transmission device, and sets a dispersion compensation value of the dispersion compensation device according to the acquired dispersion compensation value.

10. The apparatus according to claim 1, 2, or 3, comprising:

    a signal quality detection device detecting signal quality of a main signal to be received,
    a calculation device calculating the dispersion compensation information corrected on a basis of the signal quality detected by the signal quality detection device; and
    a storage device storing the dispersion compensation information calculated by the calculation device and outputting the stored dispersion compensation information to the other optical transmission device, wherein
    the acquisition device acquires the dispersion compensation information for the active line accumulated in the same optical line as the standby line of the own device from the storage device of the other optical transmission device, and sets a dispersion compensation value of the dispersion compensation device according to the acquired dispersion compensation information.

11. A dispersion compensating method of a network in which a transmitting optical transmission device and a receiving optical transmission device are coupled through an active line and a standby line, comprising:

    acquiring dispersion compensation information for another active line accommodated in a same optical line as the standby line from another optical transmission device; and
    compensating for dispersion of an optical signal transmitted through the standby line according to the acquired dispersion compensation information.

12. The method according to claim 11, wherein
    the dispersion compensation information is acquired from the other optical transmission device before detecting trouble.

13. The method according to claim 11, wherein
    dispersion compensation information transmitted on a network from the other optical transmission device is received and dispersion compensation information for the standby line is set according to the received dispersion compensation information.

**14.** The method according to claim 11, wherein
correcting the dispersion compensation information received from the other optical transmission device depending on a difference between a wavelength of the optical signal received by the other optical transmission device and a wavelength of the optical signal received by an own device, and performing a calculation using the corrected value as the dispersion compensation information for the standby line.

**15.** The method according to claim 11, 12, or 13, wherein
the dispersion compensation information about the dispersion compensation device is transmitted to the other optical transmission device on the network using an OSC (optical supervisor channel).

**16.** The method according to claim 11, 12, or 13, wherein
the dispersion compensation information about the dispersion compensation device is inserted into a blank byte of an overhead of a signal format of a main signal and is transmitted to the other optical transmission device on the network.

31 Router

32 Router

NODE A

11

21

22

Transponder

Transponder

ACTIVE
LINE 41

21a

22a

43 STANDBY
LINE

12

44 STANDBY
LINE

42 ACTIVE
LINE

14

NODE B

NODE D

OADM
RING

NODE C

51

1-WAVE
OPTICAL SW

1-WAVE
OPTICAL SW

52

13

53

VDC

VDC

54

Transponder

Transponder

23

24

33 Router

34 Router

F I G. 1

Transponder 23          Transponder 24

DETECTING TROUBLE

INQUIRY OF VDC
SETTING VALU              RECEIVING VDC SETTING
                              VALUE INQUIRY

                          TRANSMITTING VDC
RECEIVING VDC                 SETTING VALUE
SETTING VALUE

CHANGING VDC
SETTING VALUE

SWITCHING
OPTICAL SW


F I G. 2

Transponder 23    Transponder 24    NodeA Transponder 22    Node D

DETECTING TROUBLE

FIBER TYPE/FIBER LENGTH DCM ITEMS INQUIRY

FIBER TYPE/FIBER LENGTH DCM ITEMS RECEPTION

FIBER TYPE/FIBER LENGTH DCM ITEMS TRANSMISSION

FIBER TYPE/FIBER LENGTH DCM ITEMS TRANSMISSION

INQUIRY OF RECEIVED WAVELENGTH

TRANSMITTING VDC SETTING VALUE

RECEIVING VDC SETTING VALUE

INQUIRY OF TRANSMISSION WAVELENGTH

INQUIRY OF RECEIVED WAVELENGTH

TRANSMITTING RECEIVED RECEIVING

TRANSMITTING RECEIVED WAVELENGTH

TRANSMITTING TRANSMISSION WAVELENGTH

CORRECTING VDC SETTING WAVELENGTH

CHANGING VDC SETTING VALUE

SWITCHING OPTICAL SW

F I G. 3

EP 2 224 630 A1

Router 31   Router 32   Router 35

F I G.   4

Node C

Transponder 23
Work Path

Transponder 23
Protection Path

Transponder 24
Protection Path

Transponder 24
Work Path

~ 41    ~ 44    ~ 43    ~ 42

Transponder 23    Transponder 24

1-WAVE OPTICAL SWITCH — 62

1-WAVE OPTICAL SWITCH — 72

VDC — 63

VDC SETTING CIRCUIT — 61

VDC SETTING CIRCUIT — 71

VDC — 73

OPTOELECTRONIC CONVERSION CIRCUIT (O/E) — 64

OPTOELECTRONIC CONVERSION CIRCUIT (O/E) — 74

ERROR/TROUBLE DETECTION CIRCUIT — 65

VDC SETTING VALUE CALCULATION CIRCUIT — 69

VDC SETTING VALUE CALCULATION CIRCUIT — 79

ERROR/TROUBLE DETECTION CIRCUIT — 75

SIGNAL PROCESSING UNIT — 66

OPTICAL SWITCH STATE MANAGEMENT UNIT — 68

OPTICAL SWITCH STATE MANAGEMENT UNIT — 78

SIGNAL PROCESSING UNIT — 76

ELECTRO-OPTIC CONVERSION CIRCUIT (O/E) — 67

ELECTRO-OPTIC CONVERSION (E/O) — 77

— 13

F I G. 5

FIG. 6

Node

Transponder 23 Work Path

Transponder 23 Protection Path

Transponder 24 Protection Path

Transponder 24 Work Path

41

44

42

43

13

Transponder 23

Transponder 24

**Transponder 23:**

62 — 1-WAVE OPTICAL SWITCH

63 — VDC

64 — OPTOELECTRONIC CONVERSION CIRCUIT (O/E)

65 — ERROR/TROUBLE DETECTION CIRCUIT

66 — SIGNAL PROCESSING UNIT

67 — ELECTRO-OPTIC CONVERSION CIRCUIT (E/O)

61 — VDC SETTING CIRCUIT

81 — OPTICAL SWITCH STATE STORAGE CIRCUIT

69 — VDC SETTING VALUE CALCULATION CIRCUIT

68 — OPTICAL SWITCH STATE MANAGEMENT UNIT

**Transponder 24:**

72 — 1-WAVE OPTICAL SWITCH

73 — VDC

74 — OPTOELECTRONIC CONVERSION CIRCUIT (O/E)

75 — ERROR/TROUBLE DETECTION CIRCUIT

76 — SIGNAL PROCESSING UNIT

77 — ELECTRO-OPTIC CONVERSION (E/O)

71 — VDC SETTING CIRCUIT

82 — VDC SETTING VALUE STORAGE CIRCUIT

79 — VDC SETTING VALUE CALCULATION CIRCUIT

78 — OPTICAL SWITCH STATE MANAGEMENT UNIT

20

F I G. 7

Node

Transponder 23 Work Path
Transponder 23 Protection Path
Transponder 24 Protection Path
Transponder 24 Work Path

41
44
43
42

13

Transponder 23
Transponder 24

**Transponder 23:**
62 — 1-WAVE OPTICAL SWITCH
63 — VDC
61 — VDC SETTING CIRCUIT
64 — OPTOELECTRONIC CONVERSION CIRCUIT (O/E)
65 — ERROR/TROUBLE DETECTION CIRCUIT
66 — SIGNAL PROCESSING UNIT
67 — ELECTRO-OPTIC CONVERSION CIRCUIT (E/O)
68 — OPTICAL SWITCH STATE MANAGEMENT UNIT
69 — VDC SETTING VALUE CALCULATION CIRCUIT
81 — VDC SETTING VALUE STORAGE CIRCUIT

**Transponder 24:**
72 — 1-WAVE OPTICAL SWITCH
73 — VDC
71 — VDC SETTING CIRCUIT
74 — OPTOELECTRONIC CONVERSION CIRCUIT (O/E)
75 — ERROR/TROUBLE DETECTION CIRCUIT
76 — SIGNAL PROCESSING UNIT
77 — ELECTRO-OPTIC CONVERSION (E/O)
78 — OPTICAL SWITCH STATE MANAGEMENT UNIT
79 — VDC SETTING VALUE CALCULATION CIRCUIT
82 — VDC SETTING VALUE STORAGE CIRCUIT

21

F I G. 8

F I G. 9

EP 2 224 630 A1

TRANSPONDER NOTIFYING CPU OF VDC SETTING VALUE — S11

CPU PASSING VDC SETTING VALUE TO OSC — S12

IN OSC UNIT, SETTING VDC SETTING VALUE IN BLANK BYTE REGULATED BY SIGNAL FORMAT (FOR EXAMPLE, OC-3) CONFIGURING OSC — S13

OSC UNIT PERFORMING ELECTRO-OPTIC CONVERSION ACCORDING TO SET INFORMATION AND TRANSMITTING INFORMATION TO NODE IN DOWNSTREAM WITH MAIN SIGNAL — S14

FIG. 10

TRANSPONDER NOTIFYING OSC UNIT OF VDC SETTING VALUE —S21

IN OSC UNIT, SETTING VDC SETTING VALUE IN BLANK BYTE REGULATED BY SIGNAL FORMAT (FOR EXAMPLE, OC-3) CONFIGURING OSC —S22

OSC UNIT PERFORMING ELECTRO-OPTIC CONVERSION ACCORDING TO SET INFORMATION AND TRANSMITTING INFORMATION TO NODE IN DOWNSTREAM WITH MAIN SIGNAL —S23

F I G. 1 1

F I G.  1 2

NODE B

12

AMP 127

From NODE A    AMP 121

DMUX 122

TRANSFERRING VDC SETTING VALUE

MUX 126

To NODE A

Transponder 123

CPU 124

Transponder
SONET DCC or Digital

125

COLLECTING VDC SETTING VALUE

F I G. 1 3

131

| FAS | OTUk OH | O P U K O H | OPU area | FEC |
|---|---|---|---|---|
| ODUk OH | | | | |

| 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|
| Frame Alignment OH | | | | | | | OTUk OH | | | | | | | OPUk OH | |
| RES | | | TCM/ ACT | TCM6 | | | TCM5 | | | TCM4 | | | FTFL | | |
| TCM3 | | | TCM2 | | | TCM1 | | | PM | | | EXP | | | |
| GCC1 | | GCC2 | | APS/PCC | | | RES | | | | | | | | |

132

PM

| 1 | 2 | 3 |
|---|---|---|
| TTI | BIP-8 | |
| SAPI | | |
| DAPI | | |
| Operator specific | | |

| 1 | 2 | 3 | 4 | 5 | 6 | 7 | 8 |
|---|---|---|---|---|---|---|---|
| BEI | | | | BDI | STAT | | |

PM : Path Monitoring
TCM : Tandem Connection Monitoring
ACT : Activation/deactivation Control Channel
FTFL : Fault Type & Fault Location reporting channel
EXP : Experiment
GCC : General Communication Channel
APS : Automatic Protection Switching coordination channel
PCC : Protection Communication Control channel
STAT : Status

F I G. 1 4

114

| 9 Rows | STSPOH (9 Bytes) | Fixed Stuff (3N-9 Bytes) | STS-Nc Payload Capacity (N × 780 Bytes) |

← N × 87 Columns →

F I G.  1 5

Transport Overhead (9 columns)

| A1 | A1 | A1 | A2 | A2 | A2 | J0 | Z0 | Z0 |
|----|----|----|----|----|----|----|----|----|
| B1 |    |    | E1 |    |    | F1 |    |    |
| D1 |    |    | D2 |    |    | D3 |    |    |
| H1 | H1* | H1* | H2 | H2* | H2* | H3 | H3* | H3* |
| B2 | B2 | B2 | K1 |    |    | K2 |    |    |
| D4 |    |    | D5 |    |    | D6 |    |    |
| D7 |    |    | D8 |    |    | D9 |    |    |
| D10 |    |    | D11 |    |    | D12 |    |    |
| S1 | Z1 | Z1 | Z2 | Z2 | M1 | E2 |    |    |

Section Overhead

Line Overhead

151

151a

⊠ : Undefined Overhead byte (All-zeros pattern as an objective)

F I G. 1 6

F I G. 1 7

EP 2 224 630 A1

EP 2 224 630 A1

F I G .  1 8

F I G. 1 9

EP 2 224 630 A1

FIG. 20

<table>
<tr><td colspan="2">**INTERNATIONAL SEARCH REPORT**</td><td>International application No.</td></tr>
<tr><td colspan="2"></td><td>PCT/JP2007/001446</td></tr>
</table>

**A. CLASSIFICATION OF SUBJECT MATTER**
*H04J14/00*(2006.01)i, *H04B10/02*(2006.01)i, *H04B10/18*(2006.01)i, *H04B10/20*(2006.01)i, *H04J14/02*(2006.01)i

According to International Patent Classification (IPC) or to both national classification and IPC

**B. FIELDS SEARCHED**

Minimum documentation searched (classification system followed by classification symbols)
H04J14/00, H04B10/02, H04B10/18, H04B10/20, H04J14/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-96499 A  (Fujitsu Ltd.),<br>12 April, 2007 (12.04.07),<br>Full text; all drawings<br>& US 2007/0071447 A1 | 1-16 |

☐ Further documents are listed in the continuation of Box C.  ☐ See patent family annex.

| | |
|---|---|
| * Special categories of cited documents:<br>"A" document defining the general state of the art which is not considered  to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>22 February, 2008 (22.02.08) | Date of mailing of the international search report<br>04 March, 2008 (04.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003179580 A